# EUROPÄISCHE PATENTSCHRIFT

(11) **EP 3 596 563 B1**
(45) Veröffentlichungstag und Bekanntmachung des Hinweises auf die Patenterteilung: **29.09.2021**
(21) Anmeldenummer: 18712831.9
(22) Anmeldetag: 14.03.2018
(51) Int. Cl.: G05B 19/404, G05B 19/401, B23Q 15/24

(54) **VERFAHREN ZUM BEARBEITEN VON WERKSTÜCKEN MIT EINEM BEARBEITUNGSZENTRUM**
METHOD FOR THE MACHINING OF WORKPIECES USING A MACHINING CENTER
PROCÉDÉ D'USINAGE DE PIÈCES AVEC UN CENTRE D'USINAGE

(30) Priorität: 14.03.2017 DE 102017105404
(43) Veröffentlichungstag der Anmeldung: 22.01.2020
(73) Patentinhaber: Mikron Holding AG, 2502 Biel (CH)
(72) Erfinder: SAUTER, Peter, 72459 Albstadt (DE); BRAUN, Hans-Dieter, 78665 Frittlingen (DE)
(74) Vertreter: Westphal, Mussgnug & Partner Patentanwälte mbB
(86) Internationale Anmeldenummer: PCT/EP2018/056331
(87) Internationale Veröffentlichungsnummer: WO 2018/167117

(56) Entgegenhaltungen:
- EP-A1- 2 394 779
- EP-A2- 0 431 572
- DE-A1- 19 958 616
- DE-A1-102004 058 891

## Beschreibung

Die vorliegende Erfindung betrifft ein Verfahren zum Bearbeiten von Werkstücken mit einem Bearbeitungszentrum, wobei das Bearbeitungszentrum eine Werkzeugmaschine mit einer ersten Arbeitsspindel zum Bearbeiten eines ersten Werkstücks und einer zweiten Arbeitsspindel zum spanenden Bearbeiten eines zweiten Werkstücks aufweist. Im Folgenden wird die Erfindung anhand von zwei Arbeitsspindeln erläutert, ist aber ohne Einschränkungen auf Werkzeugmaschinen übertragbar, die mehr als zwei Arbeitsspinden und insbesondere vier Arbeitsspindeln aufweisen. Derartige Arbeitsspindeln werden häufig auch als Mehrspindler bezeichnet. Üblicherweise sind die Arbeitsspindeln mechanisch derart miteinander verbunden, dass alle Arbeitsspindeln während der Bearbeitung dieselben Bewegungen ausführen. Folglich werden sämtliche Werkstücke auf dieselbe Weise parallel bearbeitet. Hieraus ergibt sich ein wesentlicher Vorteil gegenüber einem Bearbeitungszentrum mit einer Werkzeugmaschine mit nur einer Arbeitsspindel, da die Anzahl der bearbeitbaren Werkstücke pro Zeiteinheit deutlich gesteigert werden kann.

Insbesondere bei der serienmäßigen Herstellung von hochgenauen Werkstücken weisen Mehrspindler einen prinzipiellen Nachteil gegenüber einer Werkzeugmaschine mit nur einer Spindel auf. Zur Herstellung von hochgenauen Werkstücken mit Werkzeugmaschinen, die nur eine Spindel aufweisen, können die Werkstücke zunächst bearbeitet und dann mit einer Vermessungseinrichtung vermessen werden, um so die Abweichungen zwischen den Ist- und den Sollmaßen zu bestimmen. Anschließend wird die eine Spindel mit Unterstützung einer Steuereinheit unter Verwendung von Korrekturdaten, auch Offset-Werte genannt, entsprechend korrigiert und die Werkstücke nachbearbeitet. Diese Nachbearbeitung wird auch als Finishing bezeichnet. Diese Schritte können mehrmals hintereinander durchgeführt werden, bis dass die Werkstücke die gewünschten Maße aufweisen.

Im Folgenden soll unter "Bearbeitung" die Bearbeitung der Werkstücke ohne Korrektur und unter "Nachbearbeitung" die Bearbeitung mit Korrektur der jeweiligen Arbeitsspindeln verstanden werden.

Bei Mehrspindlern ist diese Vorgehensweise jedoch nicht ohne weiteres möglich. Wird ein erstes Werkstück mit einer ersten Arbeitsspindel und ein zweites Werkstück mit einer zweiten Spindel bearbeitet, so weichen die Maße der beiden Werkstücke unter anderem aus folgenden Gründen voneinander ab: Die beiden Arbeitsspindeln können nie exakt parallel zueinander ausgerichtet werden. Jede Arbeitsspindel wird mit ihrem eigenen Werkzeug betrieben, die Formunterschiede zueinander aufweisen. Zudem können die eingesetzten Werkzeuge einem unterschiedlichen Verschleiß unterworfen sein, was ihre Formunterschiede verstärkt. Darüber hinaus ist es nicht möglich, die Werkzeuge mit der gleichen Ausrichtung in die Arbeitsspindeln einzuspannen. Selbiges gilt auch für das Einspannen der Werkstücke in die eingesetzten Spannsysteme. Folglich weist das Ist-Maß des ersten Werkstücks nach der Bearbeitung eine erste Abweichung vom Sollmaß und das Ist-Maß des zweiten Werkstücks eine zweite Abweichung vom Sollmaß auf, die nicht gleich sind.

Wie eingangs erwähnt, sind typischerweise die erste und die zweite Arbeitsspindel mechanisch derart miteinander verbunden, dass die beiden Arbeitsspindeln nicht unabhängig voneinander korrigiert werden können. Wird die erste Arbeitsspindel mit ersten Korrekturdaten bzw. Offset-Werten korrigiert, wird auch die zweite Arbeitsspindel mit den ersten Offset-Werten korrigiert. Das Bearbeiten des zweiten Werkstücks mit der zweiten Arbeitsspindel, welche mit den ersten Offset-Werten korrigiert worden ist, führt aber im Allgemeinen nicht zu einer Verbesserung der Präzision des zweiten Werkstücks und kann sogar zur Unbrauchbarkeit des zweiten Werkstücks führen.

Eine Lösungsmöglichkeit ist, die korrigierende Nachbearbeitung an einer separaten Korrekturwerkzeugmaschine mit einer Arbeitsspindel vorzunehmen, was aber ein Umspannen notwendig macht, wodurch die Präzision negativ beeinflusst wird. Wie oben erwähnt, weisen Mehrspindler insbesondere den Vorteil auf, dass die Anzahl der bearbeitbaren Werkstücke pro Zeiteinheit gegenüber Werkzeugmaschinen mit einer Arbeitsspindel deutlich gesteigert werden kann. Aufgrund der Tatsache, dass diese Korrekturwerkzeugmaschine nur eine Arbeitsspindel aufweist und die Werkstücke zur Nachbearbeitung umgespannt werden müssen, wird dieser Vorteil in der Gesamtbetrachtung der Fertigung der betreffenden Werkstücke wieder zunichte gemacht. Zudem ist das Vorsehen einer separaten Korrekturwerkzeugmaschine teuer.

Die DE 10 2004 058 891 A1 offenbart ein Bearbeitungszentrum mit zwei Arbeitsspindeln und zwei unabhängig voneinander betätigbaren z-Achsen, wodurch es möglich ist, auf die z-Achse bezogene Abweichungen an den beiden Werkstücken unabhängig voneinander zu korrigieren. Weiterhin ist es möglich, beispielsweise die zweite Arbeitsspindel zurückzuziehen, so dass sowohl das erste Werkstück als auch das zweite Werkstück nacheinander mit der ersten Arbeitsspindel nachbearbeitet werden können, wobei das erste Werkstück mit den ersten Offset-Werten und das zweite Werkstück mit den zweiten Offset-Werten nachbearbeitet wird. Allerdings ist das Vorsehen von zwei unabhängig voneinander betätigbaren z-Achsen relativ aufwendig, so dass die entsprechend eingerichteten Bearbeitungszentren einen komplexen Aufbau aufweisen. Das in der DE 10 2004 058 891 A1 gezeigte Bearbeitungszentrum ist in einer sehr häufig verwendeten Portal- oder Gantrybauweise ausgeführt. Hierbei ist der Bearbeitungsraum von zwei Seitenwänden seitlich begrenzt, was zur Folge hat, dass auch der Verfahrweg der beiden Arbeitsspindeln entlang der x-Achse begrenzt ist. In den meisten Fällen kann die nicht zurückgezogene erste Arbeitsspindel das zweite Werkstück nicht oder nur teilweise erreichen, so dass die oben beschriebene Nachbearbeitung des zweiten Werkstücks mit der ersten Arbeitsspindel häufig nicht umsetzbar ist. Diese Problematik tritt aber auch bei andern Bauweisen auf, beispielsweise bei der Kreuztisch- und der Fahrständerbauweise.

Weiterhin sind Bearbeitungszentren bekannt, bei welchen beispielsweise die zweite Arbeitsspindel über weitere Hilfsachsen relativ zur ersten Arbeitsspindel nicht nur entlang der z-Achse, sondern auch entlang der X- und y-Achse verstellbar ist. Allerdings sind neben den Hilfsachsen zusätzliche Motoren und Antriebe notwendig, die kompliziert anzusteuern und teuer in der Herstellung sind. Zudem lassen sich die Korrekturen nur bezogen auf die drei Raumachsen vornehmen. Winkelige Korrekturen lassen sich nicht vornehmen.

EP 0 431 572 A2 und DE 199 58 616 A1 offenbaren, dass nach einer Bearbeitung eines Werkstücks, das Werkstück vermessen wird und ggf. nachbearbeitet wird. EP 2 394 779 A1 offenbart das Einspannen und Entnehmen der Werkstücke in einem Rüstraum ggf. durch einen Greifroboter und das Zuführen des Werkstücks auf dem Spannsystem in den Bearbeitungsraum.

Aufgabe einer Ausführungsform der vorliegenden Erfindung ist es daher, ein Verfahren zum Betreiben eines Bearbeitungszentrums zu schaffen, mit den es möglich ist, auf einfache und zeitsparende Weise eine Nachbearbeitung der bearbeiteten Werkstücke vorzunehmen, ohne dass das hierzu benötigte Bearbeitungszentrum einen komplizierten Aufbau aufweist.

Diese Aufgabe wird mit den in Anspruch 1 angegebenen Merkmalen gelöst. Vorteilhafte Ausführungsformen sind Gegenstand der Unteransprüche.

Das Bearbeitungszentrum kann dabei insbesondere in der Portal- oder Gantrybauweise ausgeführt sein, aber auch in anderen Bauwiesen wie der Kreuztisch- und der Fahrständerbauweise. Ein wichtiger Punkt ist die zumindest innerhalb des Bearbeitungsraums verlaufende Verschiebebahn, entlang welcher das Spannsystem während der Bearbeitung verschoben wird. Da die Werkstücke in das Spannsystem eingespannt sind, werden die Werkstücke entsprechend mit verschoben. Folglich müssen die Halterungen der Arbeitsspindeln nicht mehr entlang der Achse, in welcher die Verschiebebahn verläuft, verschiebbar ausgeführt sein.

Im Folgenden soll unter einem Bearbeitungsraum derjenige Raum verstanden werden, in welchem ein Werkstück bearbeitet wird und insbesondere eine Formänderung erfährt. Üblicherweise wird der Bearbeitungsraum von der Werkzeugmaschine definiert.

Das erste und das zweite Werkzeug werden unter Verwendung derselben Sollmaße auf dieselbe Weise mit der ersten bzw. der zweiten Arbeitsspindel bearbeitet, so dass sie dieselben Sollmaße aufweisen. Nach abgeschlossener Bearbeitung weisen sie aufgrund der eingangs erläuterten Umstände unterschiedliche Ist-Maße auf, so dass das erste Werkstück mit ersten Korrekturdaten und das zweite Werkstück mit zweiten Korrekturdaten nachbearbeitet werden müssen, um beide Werkstücke mit demselben Sollmaß zu versehen. Vorschlagsgemäß wird hierzu eine der beiden Arbeitsspindeln als die Nachbearbeitungsspindel bestimmt, beispielsweise die erste Arbeitsspindel. Anschließend wird die Nachbearbeitungsspindel mit den ersten Korrekturdaten beaufschlagt und das erste Werkstück unter Verwendung der ersten Korrekturdaten mit der Nachbearbeitungsspindel nachbearbeitet. Nach abgeschlossener Nachbearbeitung des ersten Werkstücks wird die Nachbearbeitungsspindel mit den zweiten Korrekturdaten beaufschlagt und das zweite Werkstück unter Verwendung der zweiten Korrekturdaten mit der Nachbearbeitungsspindel nachbearbeitet. Da das Spannsystem, in welches das erste Werkstück und das zweite Werkstück unter Verwendung der Spannmittel eingespannt sind, zumindest innerhalb des Bearbeitungsraums entlang der Verschiebebahn verschiebbar ist, ist die Erreichbarkeit des zweiten Werkstücks für die als die Nachbearbeitungsspindel verwendete erste Arbeitsspindel immer gegeben. Es ist nicht notwendig, die zweite Arbeitsspindel, die nicht während der Nachbearbeitung verwendet wird, mit einer gesonderten Beweglichkeit relativ zur ersten Arbeitsspindel auszustatten, wie es beispielsweise bei der bereits erwähnten DE 10 2004 058 891 A1 der Fall ist. Der Aufbau des Bearbeitungszentrums kann daher einfach gehalten werden.

Erfindungsgemäß umfasst das Verfahren den folgenden Schritt:
- Erzeugen der ersten Korrekturdaten anhand einer Bearbeitung eines ersten Referenzwerkstücks und der zweiten Korrekturdaten anhand einer Bearbeitung eines zweiten Referenzwerkstücks für jedes eingesetzte Spannsystem mittels einer Spannsystem-Vermessungseinrichtung.

Wie bereits eingangs erwähnt, können die beiden Arbeitsspindeln nie exakt parallel zueinander ausgerichtet werden. Zudem weist jedes der verwendeten Spannsysteme eine bestimmte Abweichung vom Sollzustand auf. Diese Abweichungen der Arbeitsspindeln und der Spannsysteme vom Sollzustand, auch als System- oder Geometriefehler bezeichnet, ändern sich im Betrieb üblicherweise nicht. Dies führt beispielsweise dazu, dass alle Werkstücke, welche im Spannsystem A eingespannt und mit der ersten Arbeitsspindel bearbeitet werden, nach der Bearbeitung dasselbe Ist-Maß aufweisen. Die Korrekturdaten für jedes verwendete Spannmittel können anhand einer Bearbeitung eines ersten Referenzwerkstück, welches mit der ersten Arbeitsspindel bearbeitet wird, und eines zweiten Referenzwerkstücks, welches mit der zweiten Arbeitsspindel bearbeitet wurde, ermittelt werden. Hierzu kann jede geeignete SpannsystemVermessungseinrichtung verwendet werden. Folglich liegen für jede Kombination aus Spannmittel und Arbeitsspindel Korrekturdaten vor. Die Korrekturdaten werden in der Steuereinheit hinterlegt und bei der Nachbearbeitung mit der Nachbearbeitungsspindel berücksichtigt. Auf diese Weise können die Korrekturdaten anhand von Vermessungen, die vor der eigentlichen Serienherstellung durchgeführt werden, generiert werden, ohne dass die Serienproduktion angehalten werden muss.

Erfindungsgemäß weist das Verfahren folgenden Schritt auf:
- Erzeugen der ersten Korrekturdaten anhand einer Bestimmung der Ist-Maße des bearbeiteten ersten Werkstücks und Erzeugen der zweiten Korrekturdaten anhand einer Bestimmung der Ist-Maße des bearbeiteten zweiten Werkstücks mittels einer Werkstück-Vermessungseinrichtung.

In dieser Ausführungsform werden die Ist-Maße nach jeder Bearbeitung in der Serienfertigung bestimmt und in der Steuereinheit abgelegt. Folglich muss zwischen der Bearbeitung und der Nachbearbeitung ein Vermessungsschritt eingeführt werden, der die Serienfertigung verlangsamt. Allerdings weist diese Ausführungsform den Vorteil auf, dass die aktuellen Ist-Maße bekannt sind und entsprechend korrigiert werden können. Wie oben erläutert, gibt es systematische Fehler, die immer wieder kehren und zu denselben Abweichungen führen. Allerdings können auch während der Bearbeitung beispielsweise durch Verschmutzungen, Verrutschen des Werkstücks oder Abrieb oder Beschädigungen eines der Werkzeuge Abweichungen entstehen, die sich von den wiederkehrenden Abweichungen unterscheiden. Diese sporadischen Abweichungen können in dieser Ausführungsform erfasst werden.

Es ist möglich, einen Schwellenwert für die Abweichung des Ist-Maßes vom Sollmaß zu definieren. Wenn die Abweichungen unter dem Schwellenwert liegen, können die Abweichungen akzeptiert werden. Für den Fall, dass die betreffenden Werkstücke bereits nach der Bearbeitung Ist-Maße aufweisen, die unter dem Schwellenwert liegen, kann auf eine Nachbearbeitung verzichtet werden, so dass unnötige oder gar kontraproduktive Nachbearbeitungen vermieden werden.

Zudem können auch die Ist-Maße der nachbearbeiteten Werkstücke mittels der Werkstück-Vermessungseinrichtung bestimmt werden. Für den Fall, dass die Ist-Maße der nachbearbeiteten Werkstücke immer noch zu stark von den Sollmaßen abweichen, kann erneut eine Nachbearbeitung mit entsprechend geänderten Korrekturdaten durchgeführt oder die betreffenden Werkstücke als Ausschuss gekennzeichnet werden. Folglich kann unter Verwendung der Werkstück-Vermessungseinrichtung auch eine Qualitätskontrolle für jedes einzelne Werkstück hinsichtlich ihrer Maßgenauigkeit durchgeführt werden.

Gemäß einer weiteren Ausführungsform kann das Verfahren folgenden Schritt aufweisen:
- Einrichten des Bearbeitungszentrums derart, dass das Werkzeug derjenigen Arbeitsspindel, welche nicht als die Nachbearbeitungsspindel bestimmt wurde, beim Nachbearbeiten nicht mit den Werkstücken in Kontakt tritt.

Wie eingangs erwähnt, ist es aufgrund der zumindest innerhalb des Bearbeitungsraums verlaufenden Verschiebebahn möglich, sowohl das erste als auch das zweite Werkstück mit derselben Nachbehandlungsspindel zu bearbeiten, wozu das Spannmittel entsprechend verschoben wird. Hierdurch ist es nicht notwendig, die beiden Arbeitsspindeln unabhängig voneinander verstellbar auszuführen. Dies führt aber dazu, dass diejenige Arbeitsspindel, welche nicht als die Nachbearbeitungsspindel bestimmt wurde, auch mit denselben Korrekturdaten beaufschlagt wird wie die Nachbearbeitungsspindel selbst. Je nachdem, wie die Korrekturdaten ausfallen, kann es zu der Situation kommen, dass diejenige Arbeitsspindel, die nicht als die Nachbearbeitungsspindel bestimmt wurde, das Werkstück, welches zu einem gegebenen Zeitpunkt nicht von der Nachbearbeitungsspindel nachbearbeitet wird, mit den falschen Korrekturdaten nachbearbeitet. Dies kann dadurch verhindert werden, dass sichergestellt wird, dass die Arbeitsspindel, die nicht als die Nachbearbeitungsspindel bestimmt wurde, während der Nachbearbeitung nicht mit den Werkstücken, die auf dem gerade im Bearbeitungsraum befindlichen Spannsystem eingespannt sind, in Kontakt treten kann. Dies kann beispielsweise mittels eines teilbaren oder dreh- oder schwenkbaren Spannsystems erreicht werden, so dass diejenigen Werkstücke, die zu einem gegebenen Zeitpunkt nicht nachbearbeitet werden, nicht in Kontakt mit derjenigen Arbeitsspindel kommen können, die nicht als die Nachbearbeitungsspindel bestimmt wurde.

Bei einer weitergebildeten Ausführungsform kann das Verfahren folgenden Schritt aufweisen:
- Entnehmen desjenigen Werkzeugs aus derjenigen Arbeitsspindel, welche nicht als die Nachbearbeitungsspindel bestimmt wurde.

Das Entnehmen des Werkzeugs dient dazu zu verhindern, dass es zu einem Kontakt zwischen demjenigen Werkstück, was zu einem gegebenen Zeitpunkt nicht von der Nachbearbeitungsspindel nachbearbeitet wird, und dem Werkzeug derjenigen Arbeitsspindel kommen kann, die nicht als die Nachbearbeitungsspindel bestimmt wurde. Eine Nachbearbeitung des Werkstücks mit den falschen Korrekturdaten wird hierdurch auf einfache Weise verhindert, insbesondere auch deshalb, da moderne Bearbeitungszentren häufig über Werkzeugwechsler verfügen, so dass die Entnahme eines Werkzeugs ohne nennenswerten Zeitverlust umgesetzt werden kann.

Eine weitergebildete Ausführungsform zeichnet sich dadurch aus, dass das Verfahren folgenden Schritt aufweist:
- Einsetzen eines Schutzkörpers in diejenige Arbeitsspindel, welche nicht als die Nachbearbeitungsspindel bestimmt wurde.

Der Schutzkörper dient dazu, das Eindringen von Spänen und anderen Substanzen in diejenige Arbeitsspindel zu verhindern, welche nicht als die Nachbearbeitungsspindel bestimmt wurde. Da das Werkzeug aus dieser Arbeitsspindel entnommen wurde, kann das Werkstück das Eindringen insbesondere von Spänen in das Spannfutter nicht mehr verhindern. Diese Funktion wird vom Schutzkörper übernommen, der so ausgebildet ist, dass er während der Nachbearbeitung nicht mit den Werkstücken in Kontakt treten kann.

Nach Maßgabe einer weiteren Ausführungsform umfasst das Bearbeitungszentrum einen Rüstraum und die Verschiebebahn verläuft vom Rüstraum in den Bearbeitungsraum. Das Verfahren weist dabei die folgenden Schritte auf:
- Einspannen des ersten und des zweiten zu bearbeitenden Werkstücks in das mindestens eine Spannsystem im Rüstraum und Verschieben des Spannsystems vom Rüstraum in den Bearbeitungsraum, und
- Verschieben des Spannsystems vom Bearbeitungsraum in den Rüstraum, und Entnehmen des bearbeiteten ersten und zweiten Werkstücks aus dem Spannsystem.

Unter einem Rüstraum soll derjenige Raum verstanden werden, in welchem das Werkstück für die Bearbeitung vorbereitet und insbesondere mittels des Spannmittels in das Spannsystem eingespannt wird. Weiterhin soll im Rüstraum das bearbeitete Werkstück vom Spannsystem entnommen werden.

Beispielsweise im Bearbeitungszentrum, welches in der DE 10 2010 023 276 A1 offenbart ist, muss das Spannsystem oder das Werkstück selbst in irgendeiner Weise während des Transports vom Rüstraum in den Bearbeitungsraum übergeben werden, beispielsweise mittels eines Werkstückgreifers. Eine derartige Übergabe ist im vorliegenden Fall nicht notwendig. Das einmal im Rüstraum in das Spannsystem eingespannte Werkstück kann direkt entlang der Verschiebebahn vom Rüstraum in den Bearbeitungsraum transportiert und dort ohne eine Übergabe direkt bearbeitet werden. Es bietet sich an, das Spannsystem auf einer Tischbaugruppe anzuordnen, welche verschiebbar in der Verschiebebahn gelagert ist. Das Spannsystem kann lösbar mit der Tischbaugruppe befestigt werden, um einen Austausch zu ermöglichen.

Aufgrund der räumlichen Trennung zwischen dem Rüstraum und dem Bearbeitungsraum muss die Verschiebebahn entsprechend lang ausgebildet sein. Es bietet sich an, diejenige Arbeitsspindel, welche zum Rüstraum hinzeigt, als Nachbearbeitungsspindel zu bestimmen. Hierdurch steht auf beiden Seiten der Nachbearbeitungsspindel ein ausreichend langer Abschnitt der Verschiebebahn zur Verfügung, entlang welchem die Spannmittel insbesondere während der Nachbearbeitung bewegt werden können. Es ist daher möglich, auch Werkstücke zu bearbeiten, die eine große Erstreckung entlang der Verschiebebahn aufweisen und während der Bearbeitung und der Nachbearbeitung entsprechend weit auf der Verschiebebahn verschoben werden müssen. Zudem muss die Verschiebebahn nicht verlängert werden.

Eine weitere Ausführungsform zeichnet sich dadurch aus, dass das Bearbeitungszentrum einen im Rüstraum angeordneten Greifroboter umfasst und das Verfahren folgende Schritte aufweist:
- Auflegen des ersten und des zweiten zu bearbeitenden Werkstücks auf das Spannsystem, und
- Entnehmen des bearbeiteten ersten und zweiten Werkstücks vom Spannsystem mittels des Greifroboters.

Der Greifroboter ist so ausgestaltet, dass er in den Rüstraum greifen kann. Die räumliche Trennung zwischen dem Rüstraum und dem Bearbeitungsraum ermöglicht es, den Greifroboter so aufzustellen, dass er den Zugang zum und die Sicht auf den Bearbeitungsraum für einen Bediener nicht versperrt. Darüber hinaus ist es möglich, den Greifroboter auf einer Seite der Verschiebebahn anzuordnen, so dass der Bediener von der gegenüberliegenden Seite Zugang zum Rüstraum hat. Der Bediener und der Roboter können gleichzeitig in den Rüstraum greifen und folglich parallel arbeiten. Insofern ermöglicht es die zwischen dem Rüstraum und dem Bearbeitungsraum verlaufende Verschiebebahn, einen Greifroboter so einzusetzen, dass ein Bediener vom Greifroboter nicht gestört wird. Insofern lässt sich der Automationsgrad steigern, ohne die Möglichkeit des Bedieners, bei Bedarf in den Bearbeitungs- und Rüstprozess einzugreifen, einzuschränken.

Anstelle von Greifrobotern können beispielsweise Linear-Handlingsysteme verwendet werden, die so ausgestaltet sind, dass Werkstücke auf dem Spannsystem abgelegt und von ihm entnommen werden können.

Eine weitere Ausführungsform ist dadurch gekennzeichnet, dass das Bearbeitungszentrum eine im Rüstraum angeordnete Zuführund Entnahmeeinrichtung umfasst und das Verfahren folgende Schritte aufweist:
- Zuführen des Spannsystems zur Verschiebebahn und
- Entnehmen des Spannsystems von der Verschiebebahn mittels der Zuführ- und Entnahmeeinrichtung.

Es bietet sich an, das Spannsystem auf einer Tischbaugruppe anzuordnen, welche verschiebbar in der Verschiebebahn gelagert ist. Das Spannsystem kann lösbar mit der Tischbaugruppe befestigt werden, um einen Austausch zu ermöglichen. Weiterhin bietet es sich an, eine zwischen der Tischbaugruppe und dem Spannsystem eine Palette anzuordnen, welche beispielsweise über eine normierte Schnittstelle unter Verwendung der Zuführund Entnahmeeinrichtung schnell mit der Tischbaugruppe verbunden und wieder von ihr gelöst werden kann.

Beispielhafte Ausführungsformen der Erfindung werden im Folgenden unter Bezugnahme auf die beigefügten Zeichnungen näher erläutert. Es zeigen
- Figur 1a): eine bekannte Werkzeugmaschine in der klassischen Portal- oder Gantrybauweise in einer ersten Position,
- Figur 1b): die in Figur 1a) dargestellte Werkzeugmaschine in einer zweiten Position,
- Figur 2a): ein erstes Ausführungsbeispiel eines erfindungsgemäßen Bearbeitungszentrums in einer ersten Position,
- Figur 2b): das in Figur 2a) gezeigte Bearbeitungszentrum in einer zweiten Position,
- Figur 3a): eine prinzipielle Darstellung der Vermessung eines ersten Spannsystems,
- Figur 3b): eine prinzipielle Darstellung der Vermessung eines zweiten Spannsystems,
- Figur 4a): ein zweites Ausführungsbeispiel eines erfindungsgemäßen Bearbeitungszentrums in einer ersten Position, und
- Figur 4b): das in Figur 4a) gezeigte Bearbeitungszentrum in einer zweiten Position.

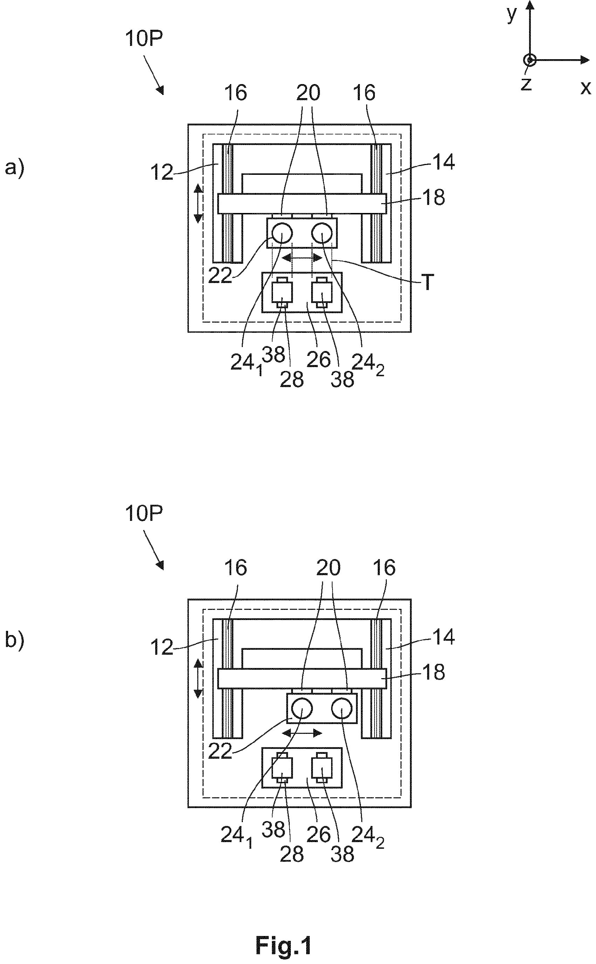

In Figur 1a) ist eine aus dem Stand der Technik bekannte Werkzeugmaschine 10P in der klassischen Portal- oder Gantrybauweise anhand einer prinzipiellen Draufsicht in einer ersten Position und in Figur 1b) in einer zweiten Position gezeigt. Die Werkzeugmaschine 10P umfasst eine erste Seitenwand 12 und eine zweite Seitenwand 14, auf deren Oberflächen ein erstes Führungsschienenpaar 16 angeordnet ist. Ein Querträger 18 ist entlang des ersten Führungsschienenpaars 16 verschiebbar an diesem gelagert. In Bezug auf das in den Figuren 1a) und 1b) dargestellte Koordinatensystem kann der Querträger 18 mittels des ersten Führungsschienenpaars 16 entlang der y-Achse verschoben werden.

An der nach vorne zeigenden Seite des Querträgers 18 ist ein zweites Führungsschienenpaar 20 angeordnet, an welchem eine Halterung 22 für eine erste Arbeitsspindel 24₁ und eine zweite Arbeitsspindel 24₂ befestigt ist. Das zweite Führungsschienenpaar 20 ist so ausgestaltet, dass die Halterung 22 entlang der x- und der senkrecht zur Zeichnungsebene verlaufenden z-Achse bewegbar ist. Die hierzu notwendigen Antriebsmittel sind nicht gesondert dargestellt. Aufgrund dieser Gestaltung können die beiden Arbeitsspindeln 24₁, 24₂ entlang der x-, y- und z-Achse linear verschoben werden. Zusätzlich lassen sich die Arbeitsspindeln 24 um ihre eigenen Achsen, die in z-Richtung verlaufen, rotieren.

Die beiden Arbeitsspindeln 24₁, 24₂ sind mechanisch miteinander gekoppelt, so dass beide Arbeitsspindeln 24₁, 24₂ auf dieselbe Weise betrieben werden.

Weiterhin weist die Werkzeugmaschine 10P einen ortsfesten Werkstücktisch 26 auf, der Spannmittel 28 umfasst, mit denen in diesem Fall ein erstes Werkstück 38₁ und ein zweites Werkstück 38₂ in den Werkstücktisch 26 eingespannt werden können. Zum Bearbeiten der Werkstücke 38₁, 38₂ wird jeweils ein nicht dargestelltes Werkzeug, beispielsweise ein Bohrer oder ein Fräskopf, in die Arbeitsspindeln 24₁, 24₂ eingespannt, die Arbeitsspindeln 24₁, 24₂ in Rotation versetzt und so relativ zu den Werkstücken 38₁, 38₂ bewegt, dass diese auf die gewünschte Weise spanend bearbeitet werden.

Anhand der Figur 1a) ist gut erkennbar, dass das erste Werkstück 38₁ mit der ersten Arbeitsspindel 24₁ und das zweite Werkstück 38₂ mit der zweiten Arbeitsspindel 24₂ bearbeitbar ist. Diese Zuordnung ist mit den Linien T gekennzeichnet. Man erkennt ferner, dass die Bewegungsfreiheit der Arbeitsspindeln 24₁, 24₂ entlang der x-Achse durch die beiden Seitenwände 12, 14 eingeschränkt ist. Eine Bearbeitung des zweiten Werkstücks 38₂ mit der ersten Arbeitsspindel 24₁ und des ersten Werkstücks 38₁ mit der zweiten Arbeitsspindel 24₂ ist folglich nicht möglich, was aus der Figur 1b) erkennbar ist. Der Abstand zwischen den beiden Seitenwänden 12, 14 bezogen auf die x-Achse lässt sich nicht beliebig vergrößern, da sich die am Querträger 18 wirkenden Biegemomente mit zunehmendem Abstand vergrößern und der Querträger 18 während der Bearbeitung in Schwingungen versetzt wird, die einer präzisen Bearbeitung der Werkstücke 38₁, 38₂ entgegenstehen.

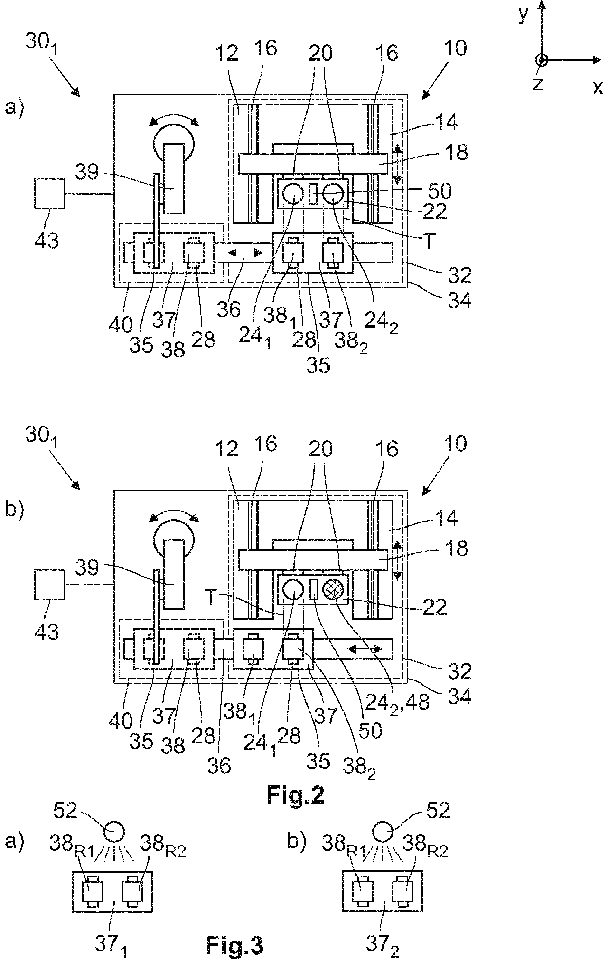

In Figur 2a) ist ein erstes Ausführungsbeispiel eines erfindungsgemäßen Bearbeitungszentrums 30₁ ebenfalls anhand einer prinzipiellen Draufsicht in einer ersten Position und in Figur 2b) in einer zweiten Position dargestellt. Das Bearbeitungszentrum 30₁ weist einen Bearbeitungsraum 32 auf, in welchem eine Werkzeugmaschine 10 angeordnet ist, die einen ähnlichen Aufbau aufweist wie die in den Figuren 1a) und 1b) dargestellte Werkzeugmaschine 10P. Das Bearbeitungszentrum 30₁ weist ein Maschinenbett 34 auf, in welchem eine Verschiebebahn 36 gelagert ist, die zumindest innerhalb des Bearbeitungsraums 32 linear entlang der x-Achse verläuft.

Das Bearbeitungszentrum 30₁ weist weiterhin einen Rüstraum 40 auf, der bezogen auf die x-Achse neben dem Bearbeitungsraum 32 angeordnet ist. Die Verschiebebahn 36 verläuft nicht nur innerhalb des Bearbeitungsraums 32, sondern erstreckt sich auch in den Rüstraum 40, so dass die Verschiebebahn 36 zwischen dem Rüstraum 40 und dem Bearbeitungsraum 32 entlang der x-Achse verläuft. Auf der Verschiebebahn 36 ist eine Tischbaugruppe 35 verschiebbar angeordnet, auf welchem ein Spannsystem 37 befestigt ist, welches Spannmittel 28 aufweist, mit denen eine Anzahl von Werkstücken 38 in das Spannsystem 37 eingespannt werden kann. Im dargestellten Ausführungsbeispiel können zwei Werkstücke 38₁, 38₂ eingespannt werden. Die gestrichelte Darstellung der linken Tischbaugruppe 35 und der mit ihr verbundenen Komponenten weist auf eine zweite Position der einzigen Tischbaugruppe 35 des Bearbeitungszentrums 30₁ hin.

Die Verschiebebahn 36 ist so ausgestaltet, dass die Werkstücke 38₁, 38₂ während der Bearbeitung, insbesondere bei Kontakt des in die betreffende Arbeitsspindel 24 eingespannten Werkzeugs mit dem zu bearbeitenden Werkstück 38, aufgrund einer Bewegung der Tischbaugruppe 35 bzw. des Spannsystems 37 entlang der x-Achse relativ zum Werkzeug bewegt werden kann. Aus diesem Grund ist es nicht notwendig, die Halterung 22 der Arbeitsspindeln 24 so am Querträger 18 zu befestigen, dass sie entlang der x-Achse verschiebbar ist. Die Halterung 22 und folglich die Arbeitsspindeln 24 sind daher nur entlang der y- und der z-Achse bewegbar, worin sich die Werkzeugmaschine 10 unter anderem von der Werkzeugmaschine 10P unterscheidet, die in den Figuren 1a und 1b gezeigt ist. Zudem können die Seitenwände 12, 14 in einem geringeren Abstand bezogen auf die x-Achse zueinander angeordnet werden, wodurch der Querträger 18 weniger stark auf Biegung belastet wird.

Das Bearbeitungszentrum 30₁ weist weiterhin einen Greifroboter 39 auf, der in den Rüstraum 40 hineingreifen und zu bearbeitende Werkstücke 38 auf das Spannsystem 37 auflegen und bearbeitete Werkstücke 38 vom Spannsystem 37 entnehmen kann. Die Spannmittel 28 können dabei so ausgestaltet sein, dass sie das Werkstück 38 nach dem Auflegen auf das Spannsystem 37 automatisch einspannen und vor dem Entnehmen automatisch freigeben.

Das Bearbeitungszentrum 30₁ umfasst eine Steuereinheit 43, mit welcher sämtliche Vorgänge innerhalb des Bearbeitungszentrums 30₁ gesteuert oder geregelt werden. Weiterhin ist die Steuereinheit 43 so ausgebildet, dass die Sollmaße für das erste und das zweite Werkstück 38₁, 38₂ zu der Steuereinheit 43 zugeführt werden können, beispielsweise über eine entsprechend ausgebildete Schnittstelle und/oder über eine Eingabeeinheit (nicht dargestellt).

Zum Bearbeiten eines Werkstücks 38 entnimmt der Greifroboter 39 dieses Werkstück 38 aus einem nicht dargestellten Regal und legt es auf das Spannsystem 37 auf, in den es mit den Spannmitteln 28 eingespannt wird. Die beiden eingespannten Werkstücke 38₁, 38₂ werden gleichzeitig mit den beiden Arbeitsspindeln 24₁, 24₂ auf dieselbe Weise bearbeitet, wobei die Anzahl der Arbeitsspindeln 24 und der gleichzeitig bearbeitbaren Werkstücke 38 nicht auf zwei begrenzt ist. Aus technischer Sicht lassen sich bis zu vier Arbeitsspindeln 24 in einer Werkzeugmaschine 10 beherrschen, so dass bis zu vier Werkstücke 38 gleichzeitig in Kontakt mit den Werkzeugen gebracht werden können.

Nachdem die Werkstücke 38₁, 38₂ in das Spannsystem 37 eingespannt worden sind, wird das Spannsystem 37 zusammen mit der Tischbaugruppe 35 mit nicht dargestellten Antriebsmitteln entlang der Verschiebebahn 36 und folglich entlang der x-Achse in den Bearbeitungsraum 32 bewegt. Nun werden die Arbeitsspindeln 24 in Rotation versetzt und so verfahren, dass sie in Kontakt mit den Werkstücken 38 treten und diese auf die gewünschte Weise unter Berücksichtigung der auf der Steuereinheit 43 hinterlegten Sollmaße bearbeiten. Für den Fall, dass es notwendig ist, die Werkstücke 38 während der Bearbeitung entlang der x-Achse zu verschieben, wird das Spannsystem 37 zusammen mit der Tischbaugruppe 35 entsprechend auf der Verschiebebahn 36 verschoben.

In der Steuereinheit 43 sind nicht nur die Sollmaße für die Werkstücke hinterlegt, sondern auch erste Korrekturdaten für das erste Werkstück 38₁ und zweite Korrekturdaten für das zweite Werkstück 38₂. Die Korrekturdaten können auf verschiedene Weisen erzeugt werden:
Das Bearbeitungszentrum weist eine Werkstück-Vermessungseinrichtung 50 auf, welche an der Halterung 22 angeordnet ist und welche die Ist-Maße der bearbeiteten Werkstücke 38₁, 38₂ ermittelt, beispielsweise mittels einer taktilen Vermessung unter Verwendung von Tastnadeln, mit denen die Werkstücke 38₁, 38₂ abgetastet werden, oder mittels einer berührungslosen Vermessung unter Verwendung von Infrarotstrahlungen oder anderen geeigneten Strahlungen.

Alternativ oder kumulativ können die Korrekturdaten auch unter Verwendung einer Spannsystem-Vermessungseinrichtung 52 erzeugt werden, welche in den Figuren 3a) und 3b) schematisch dargestellt ist. Hierbei wird in jedes eingesetzte Spannsystem 37, hier in ein erstes Spannsystem 37₁ und in ein zweites Spannsystem 37₂, ein erstes und ein zweites Referenzwerkstück 38_{R1}, 38_{R2} eingespannt und vor der eigentlichen Serienfertigung im Bearbeitungszentrum 30₁ bearbeitet. Anschließend werden die Spannsysteme 37 aus dem Bearbeitungszentrum 30₁ entnommen, die Referenzwerkstücke mittels der Spannsystem-Vermessungseinrichtung 52 vermessen und ihre Ist-Maße ermittelt. Hieraus werden dann die Korrekturdaten ermittelt, die in der Steuereinheit 43 hinterlegt werden.

Dieser Vorgang kann für jedes eingesetzte Spannsystem 37 mehrmals wiederholt werden, um möglichst repräsentative Korrekturdaten erzeugen zu können. Hierdurch lassen sich systemische oder geometrische Abweichungen ermitteln, die beispielsweise dadurch hervorgerufen werden, dass die beiden Arbeitsspindeln 24₁, 24₂ nicht exakt gleich ausgerichtet sind und/oder dass die Spannmittel 28 keine gleiche Einspannung der Werkstücke 38 bereitstellen.

Während die mit der Spannsystem-Vermessungseinrichtung 52 erzeugten Korrekturdaten für eine bestimmte Anzahl von Fertigungsdurchläufen unverändert bleibt, werden die Korrekturdaten, welche mit der Werkstück-Vermessungseinrichtung 50 nach jeder Bearbeitung eines gegebenen Werkstücks erneut bestimmt und fortlaufend in der Steuereinheit 43 hinterlegt.

Nach abgeschlossener Bearbeitung werden die Werkstücke 38₁, 38₂ auf folgende Weise nachbearbeitet: Eine der beiden Arbeitsspindeln 24₁, 24₂ wird als Nachbearbeitungsspindel ausgewählt. Im dargestellten Ausführungsbeispiel ist die erste Arbeitsspindel 24₁ als die Nachbearbeitungsspindel 24₁ ausgewählt worden. Mit dieser Nachbearbeitungsspindel 24₁ wird zunächst das erste Werkstück 38₁ unter Berücksichtigung der ersten Korrekturdaten und anschließend das zweite Werkstück 38₂ unter Berücksichtigung der zweiten Korrekturdaten nachbearbeitet. Die letztere Nachbearbeitung ist in Figur 2b) dargestellt. Die erste Arbeitsspindel 24₁ ist diejenige Arbeitsspindel, welche näher am Rüstraum 40 angeordnet ist. Da die Verschiebebahn 36 bis in den Rüstraum 40 reicht, kann die Tischbaugruppe 35 während der Nachbearbeitung über eine größere Distanz auf der bezogen auf die in Figur 2 gewählte Darstellung rechten Seite der Nachbearbeitungsspindel 24₁ verschoben werden als es der Fall wäre, wenn die zweite Arbeitsspindel 24₂ als Nachbearbeitungsspindel ausgewählt würde. Die Verschiebebahn 36 muss daher nicht über die zweite Seitenwand 14 hinaus verlängert werden.

In Figur 2b) wird das zweite Werkstück 38₂ mit der als Nachbearbeitungsspindel ausgewählten ersten Arbeitsspindel 24₁ unter Berücksichtigung der zweiten Korrekturdaten bearbeitet. Nicht explizit dargestellt ist die Nachbearbeitung des ersten Werkstücks 38₁ mit der ersten Arbeitsspindel 24₁ unter Verwendung der ersten Korrekturdaten. In diesem Fall befindet sich das Bearbeitungszentrum 30₁ im Wesentlichen in derselben Position, die in Figur 2a) dargestellt ist.

Da die beiden Arbeitsspindeln 24₁, 24₂ mechanisch gekoppelt sind, wird die zweite Arbeitsspindel 24₂ auch mit den ersten Korrekturdaten beaufschlagt. In diesem Fall kann es dazu kommen, dass das zweite Werkstück 38₂ von der zweiten Arbeitsspindel 24₂ mit den ersten Korrekturdaten nachbearbeitet wird, was nicht zielführend ist. Um dies zu verhindern, wird das Werkzeug der zweiten Arbeitsspindel 24₂ während der Nachbearbeitung entnommen und ein Schutzkörper 48 eingesetzt, welcher nicht in Kontakt mit den Werkstücken kommen kann.

Sobald die Bearbeitung und die Nachbearbeitung abgeschlossen sind, wird die Tischbaugruppe 35 mit dem Spannsystem 37 entlang der Verschiebebahn 36 und folglich entlang der x-Achse vom Bearbeitungsraum 32 in den Rüstraum 40 verschoben, wo die Spannmittel 28 die bearbeiteten Werkstücke 38 freigeben, so dass der Greifroboter 39 die bearbeiteten Werkstücke 38 vom Spannsystem 37 entnehmen und zu bearbeitende Werkstücke auf das Spannsystem 37 auflegen kann.

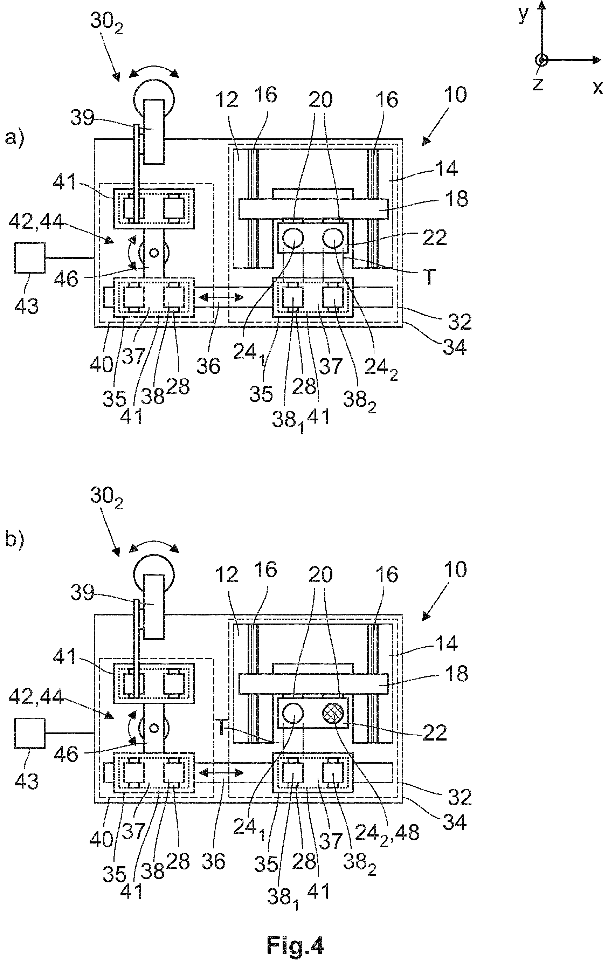

In Figur 4a) ist ein zweites Ausführungsbeispiel des erfindungsgemäßen Bearbeitungszentrums 30₂ anhand einer prinzipiellen Draufsicht während der Bearbeitung und in Figur 4b) während der Nachbearbeitung gezeigt, wobei das Bearbeitungszentrum 30₂ weitgehend ähnlich zu dem ersten Ausführungsbeispiel aufgebaut ist. Allerdings weist das Bearbeitungszentrum 30₂ nach dem zweiten Ausführungsbeispiel eine Zuführ- und Entnahmeeinrichtung 42 auf, mit welcher ein Spannsystem 37 von der Verschiebebahn 36 entnommen und dieser wieder zugeführt werden kann.

Zwischen der Tischbaugruppe 35 und dem Spannsystem 37 ist eine Palette 41 angeordnet, welche fest mit dem Spannsystem 37 verbunden und beispielsweise über normierte Schnittstellen lösbar mit der Tischbaugruppe 35 verbindbar ist. Folglich ist es möglich, unterschiedlich ausgebildete Spannsysteme 37 über die Palette 41 mit der Tischbaugruppe 35 zu verbinden und wieder zu lösen.

Das Bearbeitungszentrum 30₂ umfasst mindestens zwei Paletten 41, aber nur eine Tischbaugruppe 35. In das Spannsystem 37, welches nicht über die Palette 41 mit der Tischbaugruppe 35 verbunden ist, kann ein zu bearbeitendes Werkstück 38 unter Verwendung des Greifroboters 39 eingespannt werden, während ein weiteres Werkstück 38, welches in das über die Palette 41 mit der Tischbaugruppe 35 verbundenes Spannsystem 37 eingespannt ist, bearbeitet werden kann. Es ist folglich ein hauptzeitparalleles Rüsten möglich, so dass im Bearbeitungszentrum 30₂ gleichzeitig bearbeitet und gerüstet werden kann.

Die Zuführ- und Entnahmeeinrichtung 42 ist zwischen der Verschiebebahn 36 und dem Greifroboter 39 im Rüstraum 40 angeordnet. Die Zuführ- und Entnahmeeinrichtung 42 ist im dargestellten Ausführungsbeispiel als eine Hub- und Dreheinrichtung 44 dargestellt, welche einen Trägerbalken 46 umfasst, der um eine zentrisch angeordnete, entlang der z-Achse verlaufende Drehachse drehbar gelagert ist. An seinen freien Enden weist der Trägerbalken 46 jeweils einen nicht dargestellten Greifabschnitt auf, mit welchen die Palette 41 erfasst, angehoben und von der Tischbaugruppe 35 entnommen, um 180° gedreht und wieder abgelegt werden kann. Daher kann die Zuführ- und Entnahmeeinrichtung 42 auch als Palettenwechsler bezeichnet werden. Die Palette 41 wird folglich erst dann benötigt, wenn die Zuführ- und Entnahmeeinrichtung 42 eingesetzt wird. Im in den Figuren 2a) und 2b) gezeigten ersten Ausführungsbeispiel 30₁ ist folglich keine Palette 41 vorgesehen.

In Figur 4b) ist das Bearbeitungszentrum 30₂ während der Nachbearbeitung des ersten Werkstücks 38₁ dargestellt. Wie auch in Figur 2b) dargestellt, ist die erste Arbeitsspindel 24₁ als die Nachbearbeitungsspindel ausgewählt worden. Das erste Werkstück 38₁ wird von der ersten Nachbearbeitungsspindel unter Verwendung der ersten Korrekturdaten nachbearbeitet. Man erkennt in Figur 4b), dass es während der Nachbearbeitung des ersten Werkstücks 38₁ mit der ersten Arbeitsspindel 24₁ zu einem Kontakt zwischen dem zweiten Werkstück 38₂ und der zweiten Arbeitsspindel 24₂ kommen kann, wie es bei der vorangegangenen Bearbeitung der Fall und gewollt ist. In diesem Fall würde aber das zweite Werkstück 38₂ mit den ersten Korrekturdaten nachbearbeitet, was im dargestellten Beispiel dadurch verhindert wird, dass das Werkzeug aus der zweiten Arbeitsspindel 24₂ entnommen und der Schutzkörper 48 eingesetzt wird. Denkbar wäre auch, die Tischbaugruppe 35 zweigeteilt auszugestalten und während der Nachbearbeitung zu trennen, wobei auf jeder Hälfte jeweils ein Werkstück 38 angeordnet ist. Bezogen auf den in Figur 4b) dargestellten Fall kann beispielsweise die Hälfte, auf welcher sich das zweite Werkstück 38₂ befindet, nach rechts in eine Position verschoben werden, in welche es für die zweite Arbeitsspindel 24₂ nicht erreichbar ist. Auch könnte die Tischbaugruppe 35 drehbar gelagert sein und während der Nachbearbeitung um 90 oder 180° gedreht werden, so dass das zweite Werkstück 38₂ nicht von der zweiten Arbeitsspindel 24₂ erreichbar ist.

Anzumerken ist, dass das zweite Ausführungsbeispiel des erfindungsgemäßen Bearbeitungszentrums 30₂ keine Werkstück-Vermessungseinrichtung 50 aufweist. Folglich wird die Nachbearbeitung unter Verwendung der mit der in den Figuren 3a) und 3b) dargestellten Spannsystem-Vermessungseinrichtung 52 erzeugten Korrekturdaten durchgeführt, ohne dass die Werkstücke 38 nach der Bearbeitung vermessen werden.

### Bezugszeichenliste

- 10: Werkzeugmaschine
- 10P: bekannte Werkzeugmaschine
- 12: erste Seitenwand
- 14: zweite Seitenwand
- 16: erstes Führungsschienenpaar
- 18: Querträger
- 20: zweites Führungsschienenpaar
- 22: Halterung
- 24₁, 24₂: Arbeitsspindel
- 26: Werkstücktisch
- 28: Spannmittel
- 30, 30₁, 30₂: Bearbeitungszentrum
- 32: Bearbeitungsraum
- 34: Maschinenbett
- 35: Tischbaugruppe
- 36: Verschiebebahn
- 37: Spannsystem
- 38, 38₁, 38₂: Werkstück
- 38R, 38_{R1}, 38_{R2}: Referenzwerkstück
- 39: Greifroboter
- 40: Rüstraum
- 41: Palette
- 42: Zuführ- und Entnahmeeinrichtung
- 43: Steuereinheit
- 44: Hub- und Dreheinrichtung
- 46: Trägerbalken
- 48: Schutzkörper
- 50: Werkstück-Vermessungseinrichtung
- 52: Spannmittel-Vermessungseinrichtung

## Patentansprüche

1. Verfahren zum Bearbeiten von Werkstücken mit einem Bearbeitungszentrum (30), wobei das Bearbeitungszentrum (30)
- eine Steuereinheit (43) zum Steuern oder Regeln des Bearbeitungszentrums (30),
- zumindest einen Bearbeitungsraum (32), in welchem eine Werkzeugmaschine (10) mit einer ersten Arbeitsspindel (24₁) zum Bearbeiten eines ersten Werkstücks (38₁) und einer zweiten Arbeitsspindel (24₂) zum spanenden Bearbeiten eines zweiten Werkstücks (38₂) angeordnet ist,
- mindestens ein Spannsystem (37), welches Spannmittel (28) aufweist, mit denen zumindest das erste und das zweite Werkstück (38₁, 38₂) zum Bearbeiten in das Spannsystem (37) einspannbar ist, und
- eine zumindest innerhalb des Bearbeitungsraums (32) linear verlaufende Verschiebebahn (36), entlang welcher das mindestens eine Spannsystem (37) verschiebbar angeordnet ist, aufweist
und das Verfahren folgende Schritte umfasst:
- Zuführen von Sollmaßen für das erste und das zweite Werkstück (381) zu der Steuereinheit (43);
- Erzeugen von ersten Korrekturdaten für das erste Werkstück (38₁) und von zweiten Korrekturdaten für das zweite Werkstück (38₂) und Zuführen der Korrekturdaten zu der Steuereinheit (43),
wobei entweder die ersten Korrekturdaten anhand einer Bearbeitung eines ersten Referenzwerkstücks (38_{R1}) und die zweiten Korrekturdaten anhand einer Bearbeitung eines zweiten Referenzwerkstücks (38_{R2}) für jedes eingesetzte Spannsystem (37) mittels einer Spannmittel-Vermessungseinrichtung (52) oder
die ersten Korrekturdaten anhand einer Bestimmung der Ist-Maße des bearbeiteten ersten Werkstücks (38₁) und die zweiten Korrekturdaten anhand einer Bestimmung der Ist-Maße des bearbeiteten zweiten Werkstücks (38₂) mittels einer Werkstück-Vermessungseinrichtung (50) erzeugt werden;
- Einspannen des ersten Werkstücks (38₁) und des zweiten Werkstücks (38₁) in das Spannsystem (37) mittels der Spannmittel (28);
- zeitgleiches Bearbeiten des ersten Werkstücks (38₁) mit der ersten Arbeitsspindel (24₁) und des zweiten Werkstücks (38₂) mit der zweiten Arbeitsspindel (24₂) unter Berücksichtigung der Sollmaße;
- Bestimmen entweder der ersten Arbeitsspindel (24₁) oder der zweiten Arbeitsspindel (24₂) als Nachbearbeitungsspindel unter Verwendung der Steuereinheit (43);
- Nachbearbeiten des ersten Werkstücks (38₁) mit der Nachbearbeitungsspindel unter Berücksichtigung der ersten Korrekturdaten; und
- anschließendes Nachbearbeiten des zweiten Werkstücks (38₂) mit der Nachbearbeitungsspindel unter Berücksichtigung der zweiten Korrekturdaten, wobei das erste Werkstück (38₁) und das zweite Werkstück (38₂) während der Bearbeitung und während der Nachbearbeitung mittels des Spannsystems (37) auf der Verschiebebahn (36) relativ zur ersten und der zweiten Arbeitsspindel (24₁, 24₂) verschoben werden.

2. Verfahren nach Anspruch 1,
**gekennzeichnet durch** folgenden Schritt:
- Einrichten des Bearbeitungszentrums (30) derart, dass das Werkzeug derjenigen Arbeitsspindel (24), welche nicht als die Nachbearbeitungsspindel bestimmt wurde, beim Nachbearbeiten nicht mit den Werkstücken in Kontakt tritt.

3. Verfahren nach Anspruch 2,
**gekennzeichnet durch** folgende Schritte:
- Entnehmen desjenigen Werkzeugs aus derjenigen Arbeitsspindel (24), welche nicht als die Nachbearbeitungsspindel bestimmt wurde.

4. Verfahren nach Anspruch 3,
**gekennzeichnet durch** folgenden Schritt:
- Einsetzen eines Schutzkörpers (48) in diejenige Arbeitsspindel (24), welche nicht als die Nachbearbeitungsspindel bestimmt wurde.

5. Verfahren nach einem der vorherigen Ansprüche,
**dadurch gekennzeichnet, dass** das Bearbeitungszentrum (30) einen Rüstraum (40) umfasst und die Verschiebebahn (36) vom Rüstraum (40) in den Bearbeitungsraum (32) verläuft, und das Verfahren folgende Schritte aufweist,
- Einspannen des ersten und des zweiten zu bearbeitenden Werkstücks (38₁, 38₂) in das mindestens eine Spannsystem (37) im Rüstraum (40) und Verschieben des Spannsystems (37) vom Rüstraum (40) in den Bearbeitungsraum (32), und
- Verschieben des Spannsystems (37) vom Bearbeitungsraum (32) in den Rüstraum (40), und Entnehmen des bearbeiteten ersten und zweiten Werkstücks (38₁, 38₂) aus dem Spannsystem (37).

6. Verfahren nach Anspruch 5,
**dadurch gekennzeichnet, dass** das Bearbeitungszentrum (30) einen im Rüstraum (40) angeordneten Greifroboter (39) umfasst und das Verfahren folgende Schritte aufweist:
- Auflegen des ersten und des zweiten zu bearbeitenden Werkstücks (38₁, 38₂) auf das Spannsystem (37), und
- Entnehmen des bearbeiteten ersten und zweiten Werkstücks (38₁, 38₂) vom Spannsystem (37) mittels des Greifroboters (39).

7. Verfahren nach einem der Ansprüche 5 und 6,
**dadurch gekennzeichnet, dass** das Bearbeitungszentrum (30) eine im Rüstraum (40) angeordnete Zuführ- und Entnahmeeinrichtung (42) umfasst und das Verfahren folgende Schritte aufweist:
- Zuführen des Spannsystems (37) zur Verschiebebahn (36) und
- Entnehmen des Spannsystems (37) von der Verschiebebahn (36) mittels der Zuführ- und Entnahmeeinrichtung (42).

## Claims

1. Method for machining work pieces with a machining center (30), wherein the machining center (30) comprises:
- a control unit (43) for controlling or adjusting the machining center (30),
- at least one machining area (32) in which a machine tool (10) is arranged which has a first work spindle (24₁) for machining a first work piece (38₁) and a second work spindle (24₂) for the clamped machining of a second work piece (382)
- at least one clamping system (37) which comprises clamping means (28), with which at least the first and the second work pieces (38₁, 38₂) can be clamped into the clamping system (37) for machining, and
- a displacement track (36) which extends linearly at least within the machining area (32) and along which the at least one clamping system (37) is moveably arranged, and
the method comprises the following steps:
- providing the control unit (43) with target dimensions for the first and the second work pieces (38₁);
- generating first correction data for the first work piece (38₁) and second correction data for the second work piece (38₂) and providing the control unit (43) with the correction data,
wherein
- either the first correction data are generated based on a machining of a first reference work piece (38_{R1}) and the second correction data are generated based on a machining of a second reference work piece (38_{R2}) for each employed clamping system (37) with the aid of a clamping means measurement device (52), or
- the first correction data are generated based on a determination of the actual dimensions of the machined first work piece (38₁) and the second correction data are generated based on a determination of the actual dimensions of the machined second work piece (38₂) with the aid of a clamping means measurement device (50);
- clamping the first work piece (38₁) and the second work piece (38₂) into the clamping system (37) by means of the clamping means (28);
- simultaneous machining of the first work piece (38₁) with the first work spindle (24₁) and of the second work piece (38₂) with the second work spindle (24₂), taking into consideration the target dimensions;
- specifying, with the use of the control unit (43), either the first work spindle (24₁) or the second work spindle (24₂) as a finishing machining spindle;
- finishing of the first work piece (38₁) with the finishing machining spindle, taking into consideration the first correction data; and
- subsequent finishing of the second work piece (38₂) with the finishing machining spindle, taking into consideration the second correction data,
wherein the first work piece (38₁) and the second work piece (38₂) are shifted along the displacement track (36) relative to the first and second work spindles (24₁, 24₁) by means of the clamping system (37) during the machining and during the finishing.

2. Method in accordance with claim 1,
**characterized by** the following step:
- configuring the machining center (30) such that the tool of the work spindle (24) that was not specified as the finishing spindle does not come into contact with the work pieces.

3. Method in accordance with claim 2,
**characterized by** the following step:
- removing the tool from the work spindle (24) which was not specified as the finishing spindle.

4. Method in accordance with claim 3,
**characterized by** the following step:
- inserting a protective element (48) into the work spindle (24) which was not specified as the finishing spindle.

5. Method in accordance with any of the preceding claims,
**characterized in that** the machining center (30) includes an equipping area (40) and **in that** the displacement track (36) extends from the equipping area (40) into the machining area (32) and **in that** the method comprises the following steps:
- clamping the first and second work pieces (381, 382) to be machined into the at least one clamping system (37) in the equipping area (40) and shifting the clamping system (37) from the equipping area (40) into the machining area (32), and
- shifting the clamping system (37) from the machining area (32) into the equipping area (40) and removing the machined first and second work pieces (38₁, 38₂) from the clamping system (37).

6. Method in accordance with claim 5,
**characterized in that** the machining center (30) includes a gripping robot (39) arranged in the equipping area (40) and **in that** the method comprises the following steps:
- placing the first and the second work pieces (38₁, 38₂) to be machined onto the clamping system (37) and
- removing the machined first and second work pieces (381, 382) from the clamping system (37) by means of the gripping robot (39).

7. Method in accordance with either of claims 5 or 6,
**characterized in that** the machining center (30) includes a guide and removal device (42) arranged in the equipping room (40) and **in that** the method comprises the following steps:
- guiding the clamping system (37) onto the displacement track (36) and
- removing the clamping system (37) from the displacement track (36) by means of the guide and removal device (42).

## Revendications

1. Procédé d'usinage de pièces avec un centre d'usinage (30), selon lequel le centre d'usinage (30) comprend:
- une unité de contrôle (43) destinée à contrôler ou à régler le centre d'usinage (30),
- au moins une chambre d'usinage (32) dans laquelle est disposée une machine-outil (10) ayant un premier arbre de travail (24₁) conçu pour usiner une première pièce (38₁) et un second arbre de travail (24₂) conçu pour usiner avec enlèvement de copeaux une seconde pièce (38₂),
- au moins un système de serrage (37) qui comprend des moyens de serrage (28) avec lesquels on peut serrer au moins la première et la seconde pièce (38₁, 38₂) dans le système de serrage (37) pour l'usinage, et
- un rail de déplacement (36) se déplaçant de manière linéaire au moins à l'intérieur de la chambre d'usinage (32), le long duquel le ou les systèmes de serrage (37) sont disposés de manière coulissante,
et le procédé comprend les étapes suivantes :
- le fait de fournir des dimensions de consigne pour la première et la seconde pièce (38₁) à l'unité de contrôle (43) ;
- la production de premières données de correction pour la première pièce (38₁) et de secondes données de correction pour la seconde pièce (38₂) et le fait de fournir les données de correction à l'unité de contrôle (43),
selon lequel soit les premières données de correction sont produites à l'aide d'un usinage d'une première pièce de référence (38_{R1}) et les secondes données de correction sont produites à l'aide d'un usinage d'une seconde pièce de référence (38_{R2}) pour chacun des systèmes de serrage utilisés (37) au moyen d'un dispositif de mesure de moyen de serrage (52), soit
les premières données de correction sont produites à l'aide d'une détermination des dimensions réelles de la première pièce usinée (38₁) et les secondes données de correction sont produites à l'aide d'une détermination des dimensions réelles de la seconde pièce usinée (38₂) au moyen d'un dispositif de mesure de pièce (50) ;
- le serrage de la première pièce (38₁) et de la seconde pièce (38₂) dans le système de serrage (37) au moyen des moyens de serrage (28) ;
- l'usinage simultané de la première pièce (38₁) avec le premier arbre de travail (24₁) et de la seconde pièce (38₂) avec le second arbre de travail (242) en prenant en compte les dimensions de consigne ;
- le fait de désigner soit le premier arbre de travail (24₁) soit le second arbre de travail (24₂) comme arbre de réusinage en utilisant l'unité de contrôle (43) ;
- le réusinage de la première pièce (38₁) avec l'arbre de réusinage en prenant en compte les premières données de correction ; et
- pour finir, le réusinage de la seconde pièce (38₂) avec l'arbre de réusinage en prenant en compte les secondes données de correction,
selon lequel la première pièce (38₁) et la seconde pièce (38₂) sont déplacées sur le rail de déplacement (36) par rapport au premier et au second arbre de travail (24₁, 24₂) pendant l'usinage et pendant le réusinage au moyen des systèmes de serrage (37).

2. Procédé selon la revendication 1,
**caractérisé par** l'étape suivante :
- l'ajustement du centre d'usinage (30) de manière à ce que l'outil de l'arbre de travail (24) qui n'a pas été choisi comme arbre de réusinage n'entre pas en contact avec les pièces pendant le réusinage.

3. Procédé selon la revendication 2,
**caractérisé par** les étapes suivantes :
- le fait de retirer la pièce de l'arbre de travail (24) qui n'a pas été choisi comme arbre de réusinage.

4. Procédé selon la revendication 3,
**caractérisé par** l'étape suivante :
- l'insertion d'un corps de protection (48) dans l'arbre de travail (24) qui n'a pas été choisi comme arbre de réusinage.

5. Procédé selon l'une des revendications précédentes,
**caractérisé en ce que** le centre d'usinage (30) comprend une chambre de préparation (40) et le rail de déplacement (36) s'étend de la chambre de préparation (40) à la chambre d'usinage (32), et le procédé comprend les étapes suivantes :
- le serrage de la première et de la seconde pièce à usiner (38₁, 38₂) dans le ou les systèmes de serrage (37) dans la chambre de préparation (40) et le déplacement du système de serrage (37) de la chambre de préparation (40) à la chambre d'usinage (32), et
- le déplacement du système de serrage (37) de la chambre d'usinage (32) à la chambre de préparation (40), et le fait de retirer les première et seconde pièces usinées (38₁, 38₂) du système de serrage (37).

6. Procédé selon la revendication 5,
**caractérisé en ce que** le centre d'usinage (30) comprend un robot de préhension (39) disposé dans la chambre de préparation (40) et le procédé comprend les étapes suivantes :
- le fait de placer la première et la seconde pièce à usiner (38₁, 38₂) sur le système de serrage (37), et
- le fait de retirer les première et seconde pièces usinées (38₁, 38₂) du système de serrage (37) au moyen du robot de préhension (39).

7. Procédé selon l'une des revendications 5 ou 6,
**caractérisé en ce que** le centre d'usinage (30) comprend un dispositif de guidage et de retrait (42) disposé dans la chambre de préparation (40) et le procédé comprend les étapes suivantes :
- le fait d'amener le système de serrage (37) vers le rail de déplacement (36) et
- le fait de retirer le système de serrage (37) du rail de déplacement (36) au moyen du dispositif de guidage et de retrait (42).
